(19) Europäisches Patentamt

European Patent Office

Office européen des brevets

(11) EP 0 568 846 B1

(12) **EUROPEAN PATENT SPECIFICATION**

(45) Date of publication and mention
of the grant of the patent:
**18.06.2003 Bulletin 2003/25**

(51) Int Cl.⁷: $H04B\ 14/04$, $H04B\ 1/66$, $G11B\ 20/10$, $G11B\ 20/24$

(21) Application number: **93106167.5**

(22) Date of filing: **15.04.1993**

(54) **Quantizing error reducer for audio signal**

Quantisierungsfehlerverminderer für Audiosignal

Réducteur d'erreur de quantification pour des signaux audio

(84) Designated Contracting States:
**DE FR GB**

(30) Priority: **06.05.1992 JP 11360192**

(43) Date of publication of application:
**10.11.1993 Bulletin 1993/45**

(73) Proprietor: **SONY CORPORATION**
**Tokyo (JP)**

(72) Inventors:
• **Akune, Makoto, c/o SONY CORPORATION**
**Tokyo (JP)**
• **Robaato, Hedoru, c/o SONY CORPORATION**
**Tokyo (JP)**

(74) Representative: **Müller, Frithjof E., Dipl.-Ing.**
**Müller Hoffmann & Partner**
**Patentanwälte**
**Innere Wiener Strasse 17**
**81667 München (DE)**

(56) References cited:
**EP-A- 0 369 630**     **EP-A- 0 466 190**
**US-A- 4 751 496**

• **PATENT ABSTRACTS OF JAPAN vol. 16, no. 316 (E-1231)10 July 1992**
• **J.WATKINSON 'Art of Digital Audio' 1989 , FOCAL PRESS , LONDON , GB**
• **ICASSP '79;1979 IEEE INTERNATIONAL CONFERENCE ON ACOUSTICS,SPEECH & SIGNAL PROCESSING 2 April 1979, WASHINGTON, US pages 453 - 455 ATAL ET AL. 'OPTIMIZING PREDICTIVE CODERS FOR MINIMUMAUDIBLE NOISE'**
• **PATENT ABSTRACTS OF JAPAN vol. 16, no. 508 (E-1282)20 October 1992**

**Description**

**BACKGROUND OF THE INVENTION**

Field of the Invention

This invention relates to a quantizing error reducer for an audio signal , which is constructed to reduce a quantizing error generated in quantization of an audio signal.

Description of the Prior Art

At present, as digital audio equipments for handling audio signals in a digital form, there exist, e.g., players for so called compact discs (CD) and/or so called digital audio tape recorders (DATs), etc. In these digital audio equipments, various unified standard requirements are prescribed. For example, in the case of the bit length of digital audio signals handled in these equipments, it is prescribed from the above unified standard requirements that such audio signals have a bit length of 16 bits. Further, as the digital audio signals in these digital audio equipments, there are used digital audio signals obtained by encoding analog audio signals (sound waveform signals) by using a simple linear quantization like, e.g., so called PCM (linear pulse coding).

Meanwhile, in recent years, in digital audio equipments as described above, it is required from the above-mentioned unified standard requirements that there is provided sound having a higher quality, in view of a sense of hearing, than that of the reproduced sound actually obtained. In order that such a re-produced sound, more excellent in view of the hearing sense, is provided, a scheme is conceivable to allow digital audio signals handled in these digital audio equipments to be signals in which noise components included in the digital audio signals themselves are reduced. Reproduced sounds obtained from digital audio signals in which their noise components are reduced in this way have less noise.

As the processing for reducing the noise component of the digital audio signal, there is known, e.g., a processing system to reduce a quantizing error by a so called error feedback, to feed a quantizing error (quantizing noise or quantizing distortion) generated by a quantizer in quantizing an audio signal back to the input side of the quantizer through a noise filter.

Here, the quantizing distortion in the linear quantization like the above-described PCM coding has a frequency characteristic flat over the entire frequency band of an audio signal. However, since the ear of the human being has a difference in the hearing sensitivity depending upon a frequency of sound, it can not be said that the quantizing error reducing processing by the error feed back Is necessarily effective in view of hearing sense.

**SUMMARY AND OBJECTS OF THE INVENTION**

This invention has been proposed with the actual circumstances as described in view, and its object is to provide a quantizing error reducer for an audio signal, which is capable of reducing a quantizing error (quantizing noise) effectively from a viewpoint of hearing sense.

A quantizing error reducer according to this invention has been proposed in order to attain the above-described object. In this quantizing error reducer, the input signal is first conditioned by adding to it a dither signal. Then, a quantizing error generated in a quantizer is fed back to the input side of the quantizer through a noise filter. The filter coefficient of the noise filter is set on the basis of information relating to an equi-loudness curve corresponding to the hearing sense characteristic of the human being.

In accordance with this invention, by drawing attention to the fact that the equi-loudness curve is in correspondence with the hearing sense characteristic of the human being, an approach is employed to feed a quantizing error back to the input side of the quantizer through the noise filter of which coefficient is set on the basis of information relating to the equi-loudness curve, thereby making it possible to reduce a quantizing error in a frequency band of a sound easy to be heard. Accordingly, it is possible to reduce noises in the hearing sense thus to improve the dynamic range in the hearing sense.

**BRIEF DESCRIPTION OF THE INVENTION**

FIG. 1 is a block diagram showing the outline of the configuration of a quantizing error reducer for an audio signal of a first embodiment according to this invention,
FIG. 2 is a characteristic diagram showing an equi-loudness curve,
FIG. 3 is a characteristic diagram showing a filter characteristic,
FIG. 4 Is a characteristic diagram showing a noise frequency characteristic when an actual audio signal is passed through the quantizing error reducer of the embodiment,
FIG. 5 is a block diagram showing the circuit configuration of a second embodiment according to this invention,
FIG. 6 is a block diagram showing the circuit configuration of a third embodiment according to this invention,
FIG. 7 is a frequency characteristic diagram for explaining the masking effect,
FIG. 8 is a characteristic diagram showing a bark spectrum ,
FIG. 9 is a frequency characteristic diagram for explaining a masking threshold,

FIGS. 10 to 13 are characteristic diagrams showing filter characteristics, respectively,

FIG. 14 is a block diagram showing the actual example where the quantizing error reducer of this embodiment is applied to an encoder/decoder system for a compact disc,

FIG. 15 is a block diagram showing the actual example where the quantizing error reducer of this embodiment is applied to a 10 bit system, and

FIG. 16 is a block diagram showing the actual example where the quantizing error reducer of this embodiment is applied to a D/A conversion system for carrying out over sampling.

FIG. 17 is a frequency characteristic showing the power spectrum of an undithered sine wave of 1-bit amplitude.

FIG. 18 is a frequency characteristic showing the power spectrum of a 1-bit sine wave quantized with white dither.

FIG. 19 is a frequency characteristic showing the power spectrum of a 1-bit sine wave quantized with high-frequency dither.

## DESCRIPTION OF THE PREFERRED EMBODIMENTS

A first embodiment to which this invention is applied will now be described with reference to the attached drawings.

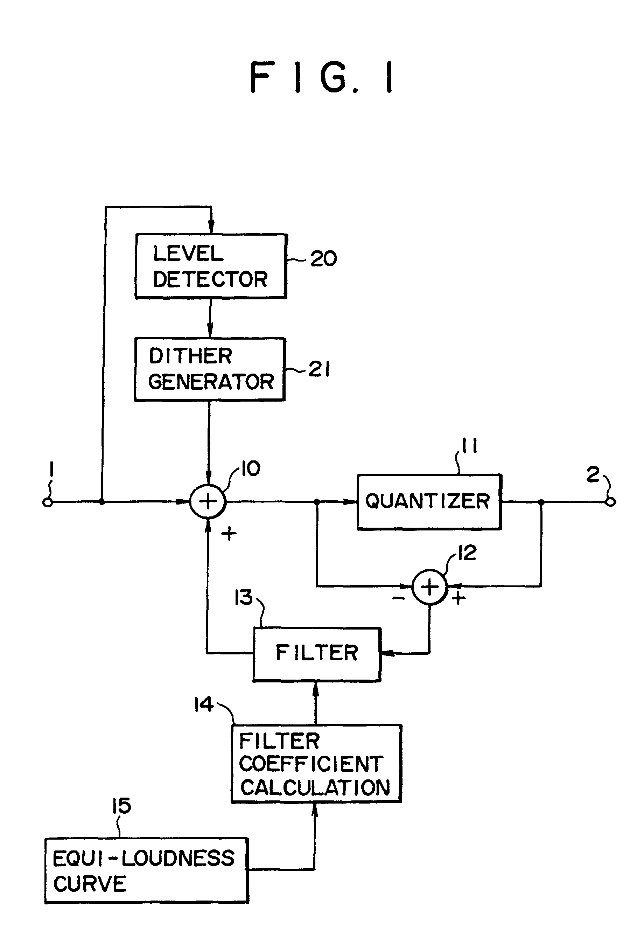

Initially referring to FIG. 1, there is shown, in a block form, the outline of the configuration of a quantizing error reducer for an audio signal of the first embodiment.

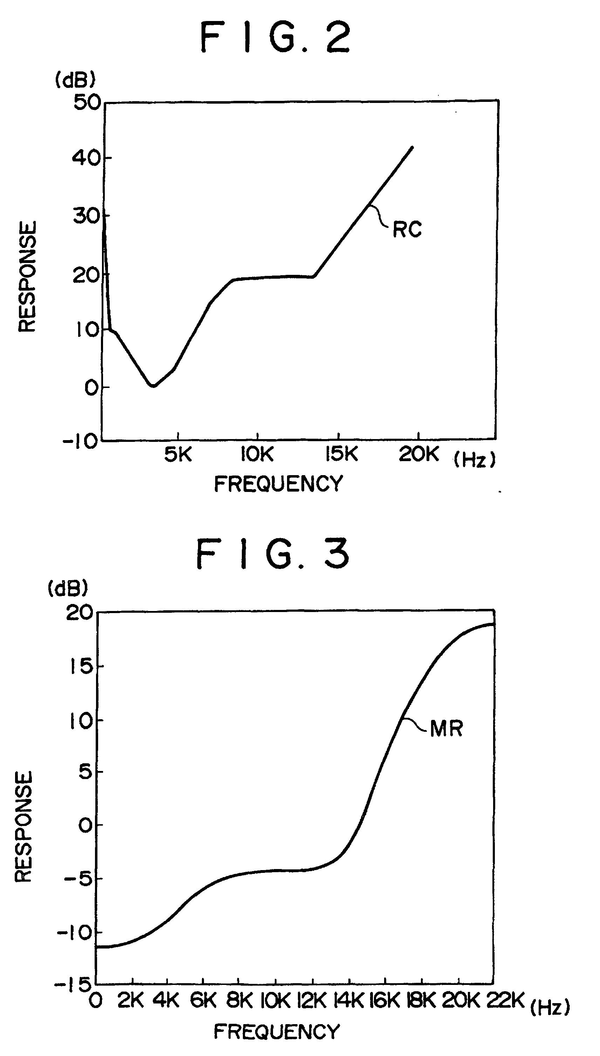

In the quantizing error reducer of the embodiment shown in FIG. 1, a quantizing error generated in a quantizer 11 is fed back to the input side of the quantizer 11 through a noise filter 13. The filter coefficient of the noise filter 13 is set on the basis of information relating to so called an equi-loudness curve RC as shown in FIG. 2 corresponding to the hearing sense characteristic of the human being. Here, a digital audio signal obtained by sampling at an arbitrary sampling frequency is delivered to the input terminal 1 of FIG. 1. The digital audio signal is combined with a dither signal generated by a dither generator 21, is then re-quantized at the quantizer 11, and is finally outputted from the output terminal 2.

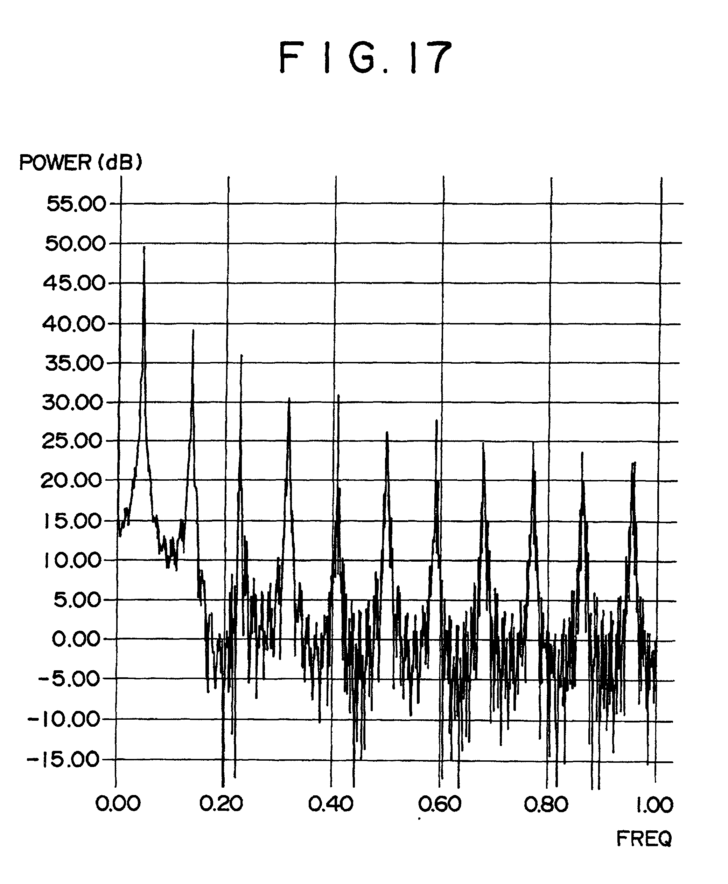

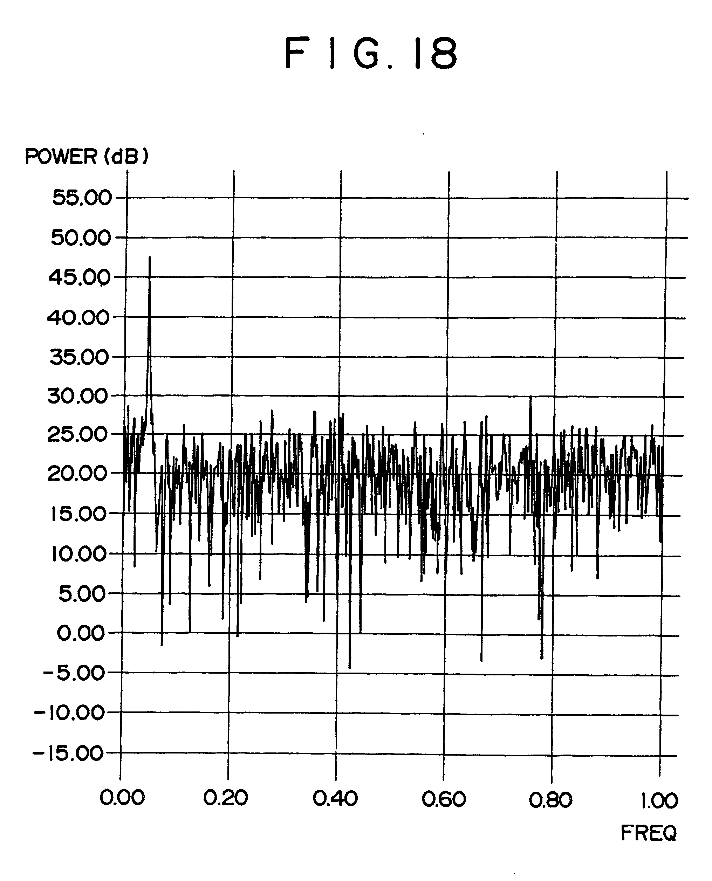

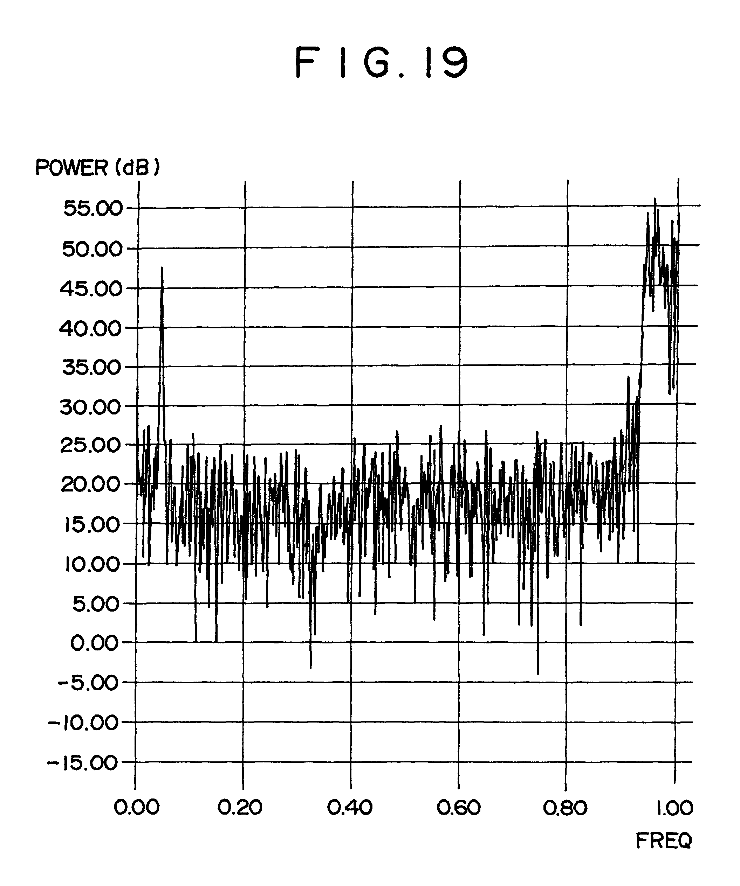

The quantization error reducer of this embodiment (and similarly the following embodiments, to be described later) consists of two subsystems, namely the dither subsystem and the noise-shaping subsystem. These subsystems have complementary effects, and their characteristics can be varied independently. A noise shaping system according to the preamble of claim 1 is known from EP-A-466190. The dither subsystem consists of a level detector 20, a dither generator 21 and an adder 10. The dither signal generated by the dither generator 21 is added to the input signal by the adder 10. The purpose of the dither subsystem is to generate a so called dither signal, defined as a random or pseudo-random signal which is added to the input signal before quantization such that signal correlation between the quantization error and the input signal is reduced. Since correlated errors are more audible than uncorrelated errors, a reduction in signal-to-error correlation reduces the quantization noise in the hearing sense. In addition, this decorrelation can enhance the effectiveness of the noise-shaping subsystem (described below) for those input audio signals in which the signal-to-error correlation is significant. The dither is generated by a dither generator 21. The spectral nature of this dither signal depends on the specific implementation of the embodiment and is determined by the characteristics of the dass of input signals to be processed. Typical dither spectra include so called white dither (equal at all frequencies) which produces theoretically optimal decorrelation, so called high-frequency dither which has its energy concentrated in inaudible ranges of the signal spectrum thus further reducing noise in the hearing sense, and all-zero dither (equivalent to no dither at all) which is appropriate when the input signal is already sufficiently random such that no further decorrelation is required. The power spectrum of an undithered sine wave of 1-bit amplitude is shown in FIG. 17; the error correlation is shown by the harmonic spectral peaks. The same signal quantized with white dither is shown in FIG. 18; there is only one spectral peak, showing that the quantization error is not correlated with the signal. FIG. 19 shows the same signal quantized with high-frequency dither; although the dither power is greater, the dither will be less audible because it is concentrated in regions where the ear is insensitive.

Depending on the specific implementation of the embodiment, a level detector 20 is used to control the frequency characteristic of the dither generated by the dither generator 21 and the level of said dither. For example, it is inappropriate to add dither to an input signal consisting of all zeros; this condition can therefore be detected by the level detector 20 and the dither generator controlled appropriately. Further, low-level input signals often require more dither than high-level signals; the level of the dither may therefore be gradually reduced as the signal level increases.

Meanwhile, in the quantizing error reducer of this embodiment, the quantization error is reduced by the noise-shaping subsystem, consisting of an adder 12 for subtracting an input to the quantizer 11 from an output from the quantizer 11 to thereby provide a quantizing error generated in quantization at the quantizer 11, a noise filter 13 for applying a filtering processing to an output from the adder 12 to output it, in which a filter characteristic is set by the filter coefficient which will be described later, an d an adder 10 for adding an output from the noise filter 13 to an input to the quantizer 11, so called an error feedback circuit is constituted. By this error feedback circuit, the quantizing error reducing effect (so called noise shaping processing) is carried out. Further, the quantizing error reducer of this embodiment includes an equi-loudness curve generation circuit 15 for generating data of an equi-loudness curve RC of FIG. 2 corresponding to the hearing sense characteristic of the human being, and a filter coefficient calculation circuit 14 for calculating the filter coefficient of the noise filter 13 on the basis of an output from the equi -loudness curve generation circuit 15.

Here, the equi-loudness curve RC of FIG. 2 is a curve corresponding to the hearing sense characteristic of the human being. This curve RC is obtained by connecting, by curve segments, sound pressures of a sound at respective frequencies which can be heard at the same loudness as that of a pure sound of, e.g., 1 KHz, and is also called an equi-sensitivity curve of loudness. In the equi-loudness curve RC, as shown in FIG. 2, the hearing ability of the human being is sharp in the vicinity of 4 KHz. Accordingly, even if the sound pressure is lower by 8 to 10 dB than that at 1 KHz , sound can be heard substantially at the same loudness as that at 1 KHz. Conversely, e.g., at 10 KHz, sound is difficult to be heard to an extent of 20 dB than that in the vicinity of 4 KHz.

Information (information of an allowable noise spectrum) relating to the equi-loudness curve RC (or its approximate curve) is outputted from the equi-loudness curve generation circuit 15, and is then sent to the filter coefficient calculation circuit 14. Accordingly, at the filter coefficient calculation circuit 14, a filter coefficient is calculated on the basis of the information relating to the equi-loudness curve RC. The filter coefficient thus calculated is further sent to the noise filter 13. In this way, by carrying out a noise shaping of an audio signal by the error feedback circuit using the noise filter 13 having a filter characteristic based on the information relating to the equi-loudness curve RC, the dynamic range in the hearing sense can be improved. Namely, by carrying out a noise shaping using an allowable noise spectrum (allowable noise level) obtained by taking the equi-loudness curve RC into account, noise shaping more effective in view of the hearing sense is conducted, thus making it possible to improve the dynamic range in the hearing sense of a reproduced sound.

Further, in this embodiment, in determination of the filter characteristic of the noise filter 13, the so called masking effect is taken into consideration. Here, the masking effect is the phenomenon that a signal is masked by another signal by the characteristic in the hearing sense of the human being, so sound cannot be heard. As this masking effect, there are the masking effect with respect to a signal on the time base, and the masking effect with respect to a signal on the frequency base (or the same time masking, the temporal masking). Even if there is a noise in the portion subject to masking, that noise cannot be heard by the masking effect For this reason, when an approach is employed to carry out a quantizing error reducing processing in which the masking effect is taken into consideration, the dynamic range in the hearing sense can be improved. In order to determine a filter characteristic in which such a masking effect is taken into consideration, a filter coefficient in which, e.g., the masking effect in the direction of the frequency base is taken into consideration is set in advance at the filter coefficient calculation circuit 14 of this embodiment For example, in order to cope with an ordinary audio sound including many medium and low frequency band components, a fixed filter coefficient in which the masking effect in the low frequency band is taken into consideration is set. Alternatively, in order to have an ability of coping with the masking effect corresponding to a spectrum of an input audio signal, an approach may be employed to generate an adaptive filter coefficient corresponding to the spectrum.

Thus, the filter coefficient from the filter coefficient calculation circuit 14 is provided under the state where the equi-loudness curve RC and the masking effect are taken into consideration. Accordingly, the filter characteristic of the noise filter 13 is set on the basis of the fixed or adaptive filter coefficient in which the masking effect is taken into consideration and the filter coefficient relating to the equi-loudness curve RC.

Namely, the noise filter 13 at this time serves as a filter having a filter characteristic as indicated by the curve MR obtained from the masking effect and the equi-loudness curve as shown in FIG. 3. By allowing the noise filter 13 to have the filter characteristic indicated by the curve MR of FIG. 3, a quantizing error spectrum delivered to the noise filter 13 is changed in correspondence with the curve MR. By adding an output from the noise filter 13 to an input audio signal, the quantizing error at the quantizer 11 is reduced (subjected to noise shaping). Here, in the curve MR of FIG. 3, when the equi-loudness curve RC of FIG. 2 is taken into consideration, it is conceivable to increase the response in the frequency band less than 4 KHz (i.e., an approach may be employed to increase allowable noise), but the filter characteristic in the frequency band less than 4 KHz is caused to be flat in a second embodiment which will be described later. The reason why such a scheme is employed is as follows.

Since the equi-loudness curve RC varies steeply in the frequency band less than 4 KHz although the bandwidth is not broad, if a noise filter 13 caused to be in correspondence with the equi-loudness curve RC in the frequency band less than 4 KHz is prepared, the degree of the filter is increased. If the degree of the filter is increased as stated above, the configuration becomes complicated and becomes large in scale. However, since the effect corresponding to the scale of the filter is not obtained at this time, the filter characteristic in the frequency band less than 4 KHz is caused to be flat as described above in the second embodiment which will be described below.

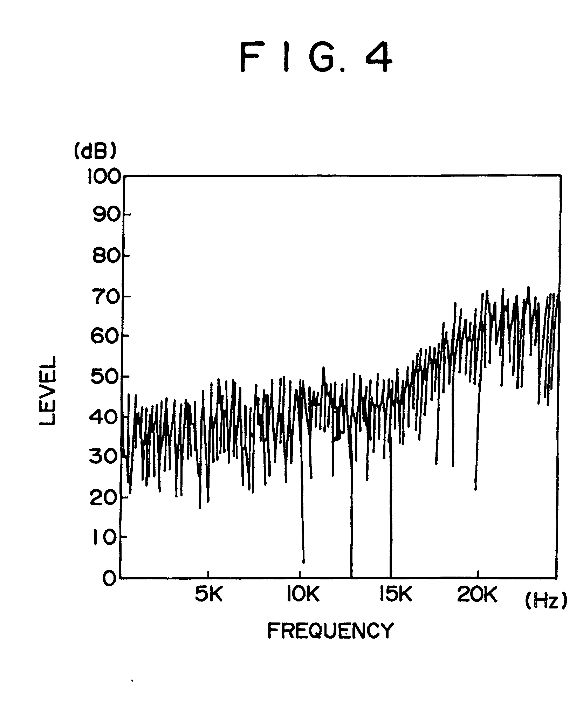

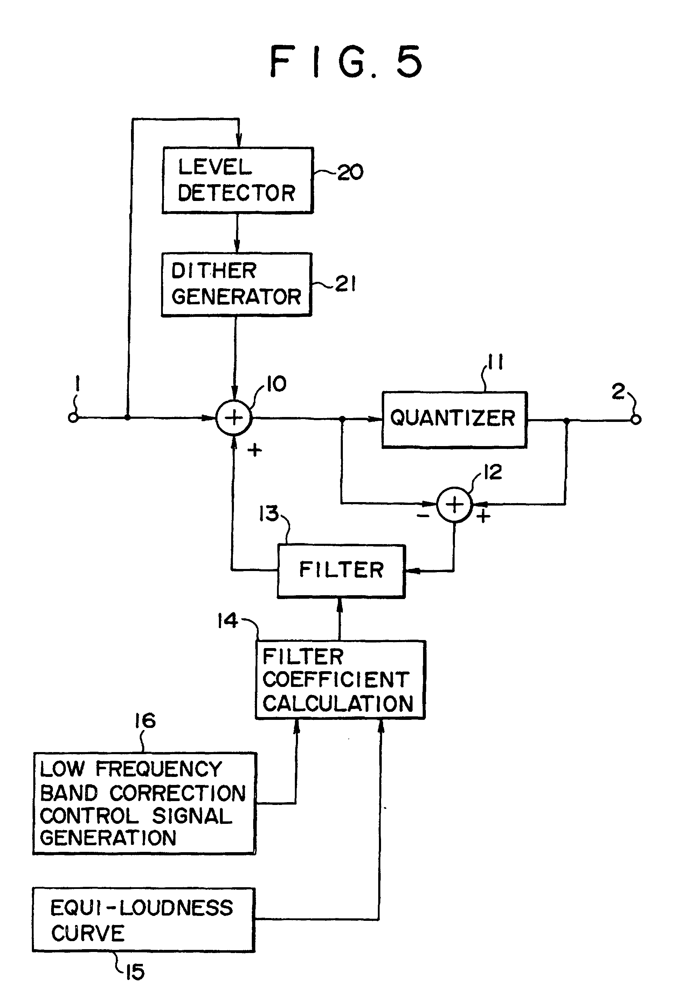

Namely, FIG. 5 shows the second embodiment of this invention wherein the same reference numerals are respectively attached to blocks corresponding to those of FIG.1, and their detailed explanation will be omitted. In FIG. 5, there is further provided a low frequency band correction control signal generation circuit 16 wherein a low frequency band correction control signal generated in this circuit is delivered to the filter coefficient calculation circuit 14. Thus, the fitter characteristic flat in the low frequency band as indicated by the above-described curve MR of FIG. 3 is realized. Further, this low frequency band correction control signal is assumed to be formed in consideration of the masking effect. Generally, in the medium and high frequency bands frequently used in an ordinary audio sound, the above-mentioned masking effect in the medium and high frequency band of the audio sound is valid. Accordingly, in the noise filter 13 of this embodiment, the response in the curve MR of the filter characteristic of FIG.3 is not lowered to such an extent that the response in the equiloudness curve RC of FIG. 2 is lowered (the curve MR is caused to be more gentle than the equi-loudness curve RC). Namely, for the purpose of realizing this, as described above, a filter coefficient in which the masking effect is taken into consideration is set. The frequency characteristic of the quantizing noise obtained when the filter characteristic of the noise filter 13 is set as shown in FIG. 3 to carry out the quantizing noise reducing processing by using an actual audio sound is shown in FIG. 4.

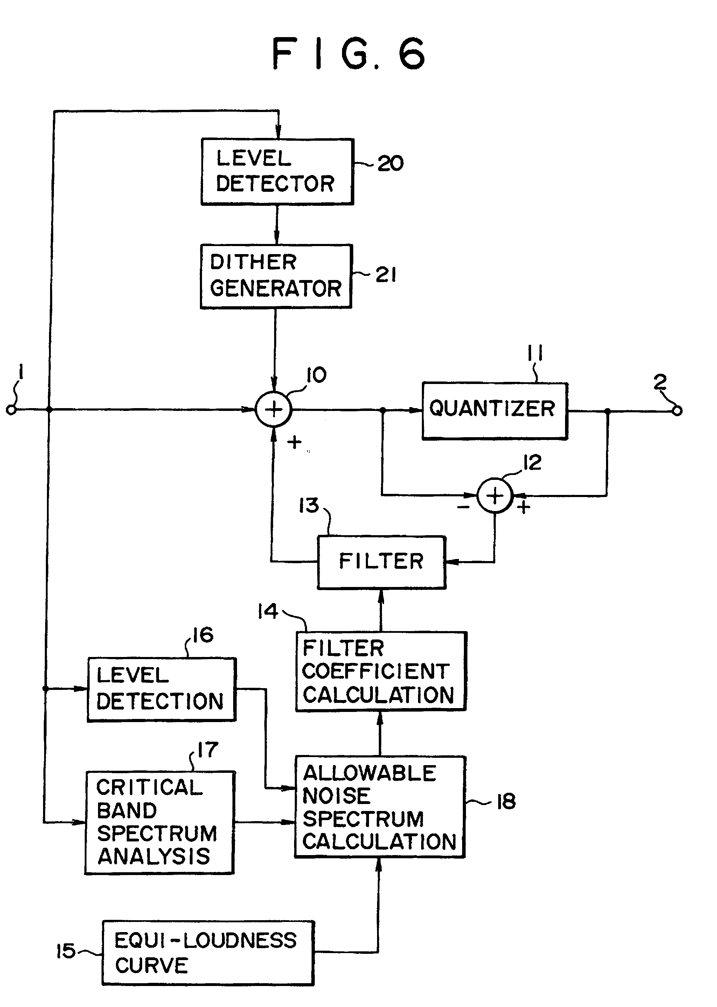

A third embodiment utilizing the masking effect will now be described with reference to FIG. 6. Also in FIG. 6, the same reference numerals are attached to blocks corresponding to those of FIG. 1, respectively.

The quantizing noise reducer of this embodiment of FIG. 6 is constructed to feed a quantizing error generated at the quantizer 11 back to the input side of the quantizer 11 through the noise filter 13. More particularly, this quantizing noise reducer comprises a level detector 16 for detecting the level of an input audio signal, a frequency analysis circuit 17 for analyzing the frequency of an input audio signal every critical band, equiloudness curve generation circuit 15 for generating information based on the so called equi-loudness curve RC as shown in FIG. 2 corresponding to the hearing sense characteristic of the human being, and an allowable noise spectrum calculation circuit 18 for changing the synthetic ratio between an output from the frequency analysis circuit 17 and an output from the equi-loudness curve generation circuit 15 to calculate an allowable noise spectrum on the basis of the synthetic information obtained. In this quantizing noise reducer, the filter characteristic of the noise filter 13 is set on the basis of output information from the allowable noise spectrum calculation circuit 18.

Namely, in the quantizing error reducer of this embodiment, by the adder 12 for subtracting an input to the quantizer 11 from an output from the quantizer 11 to thereby provide a quantizing error generated in quantization at the quantizer 11, the noise filter 13 for applying filtering processing to an output from the adder 12 to output it, and the adder 10 for adding an output from the noise filter 13 to an input to the quantizer 11, the so called error-feedback circuit is constituted. Here, the filter characteristic of the noise filter 13 is determined as follows. In actual terms, an approach is employed to calculate, by the filter coefficient calculation circuit 14, a filter coefficient based on in formation of an allowable noise spectrum which will be described of the allowable noise spectrum calculation circuit 18 to send this filter coefficient information to the noise filter 13.

Accordingly, in the above-mentioned error feedback circuit, a quantizing error reducing processing (so called noise shaping processing) based on the allowable noise spectrum which will be described is carried out. A signal thus processed is then outputted from the output terminal 2.

Meanwhile, in carrying out the quantizing error reducing processing (noise shaping processing) of an audio signal by using the above-mentioned error feedback circuit, by carrying out a processing in which so called masking of the input signal spectrum is taken into account, the dynamic range in the hearing sense can be improved. As the noise shaping in which the masking is taken into consideration, there may be enumerated, e.g., a noise shaping corresponding to a spectrum of an input audio signal in which the pattern of a signal spectrum is fixed to some extent, i.e., a noise sh aping using an allowable noise spectrum obtained in consideration of so called masking which will be described later of an input audio signal spectrum.

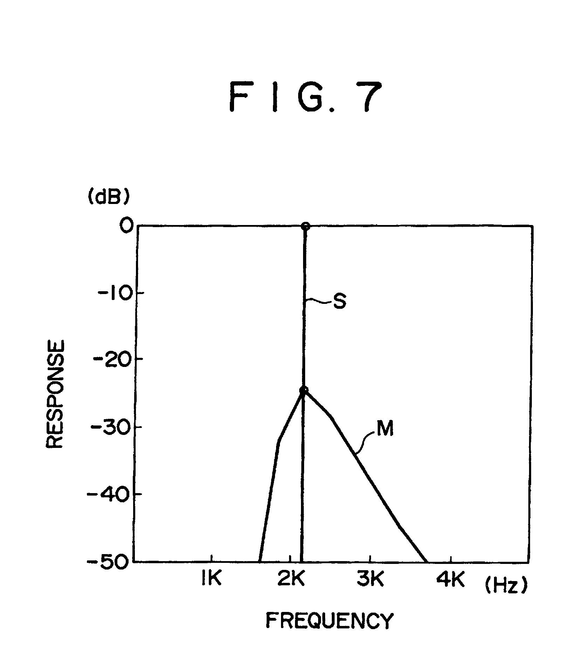

Alternatively, there is enumerated a noise shaping using an allowable noise spectrum adaptive with respect to changes in the spectrum of an input audio signal obtained in consideration of the masking of the spectrum, or the like. Here, the masking is the phenomenon that a signal is masked by another signal by the characteristic in the hearing sense of the human being, so sound is not heard. As components of the masking effect, there are the masking effect with respect to a signal on the time base and the masking effect with respect to a signal on the frequency base (or the same time masking, temporal masking). Even if there is a noise at the portion subjected to masking, that noise is difficult to be heard because of the masking effect. For example, as to the same time masking effect, as shown in FIG. 7, when the frequency response of the signal S having a certain frequency is assumed to be 0 dB, the masking effect is exerted on the response lower than that of the curve M (less than a bout -25 dB) by the above-mentioned signal S.

Further, when an approach is employed to band-divide an in put signal at critical bands by making use of the hearing sense characteristic of a human being to carry out noise shaping, in every band, by using an allowable noise spectrum in which the masking as described above is taken into consideration, noise shaping which is more effective in the hearing sense can be carried out. By carrying out such a noise shaping, the dynamic range in the hearing sen se of a reproduced sound can be improved.

In view of this, in the frequency analysis circuit 17, an approach is employed to divide the above-mentioned audio signal in to so called critical bands by making use of the hearing sense characteristic of the human being to carry out a frequency analysis in every critical band. As to the division at the above-mentioned critical bands, an approach may be employed to transform, e. g., by Fast Fourier Transformation (FFT), an input audio signal into the components on the frequency base, and thereafter to divide (band-divide) the amplitude term $A_m$ (m = 0 to 1024) of the FFT coefficient into, e.g., groups $G_n$ of 25 bands (n represents the number of respective bands, n = 0 to 24) with the above-mentioned critical bands having a broader bandwidth in the higher frequency ban d in which the hearing sense characteristic of the human being is taken into consideration.

Further, as to the frequency analysis of every respective critical band, there may be carried out such an analysis to determine a bark spectrum (spectrum of sum total) $B_n$ obtained by taking a sum total (the sum total of peak, average or energy of the amplitude term $A_m$) of respective amplitude terms $A_m$ of every band, e. g., by the following equation (1):

$$B_n = 10 \log_{10} C_n(P_n)2 \text{ [dB]} \qquad (1)$$

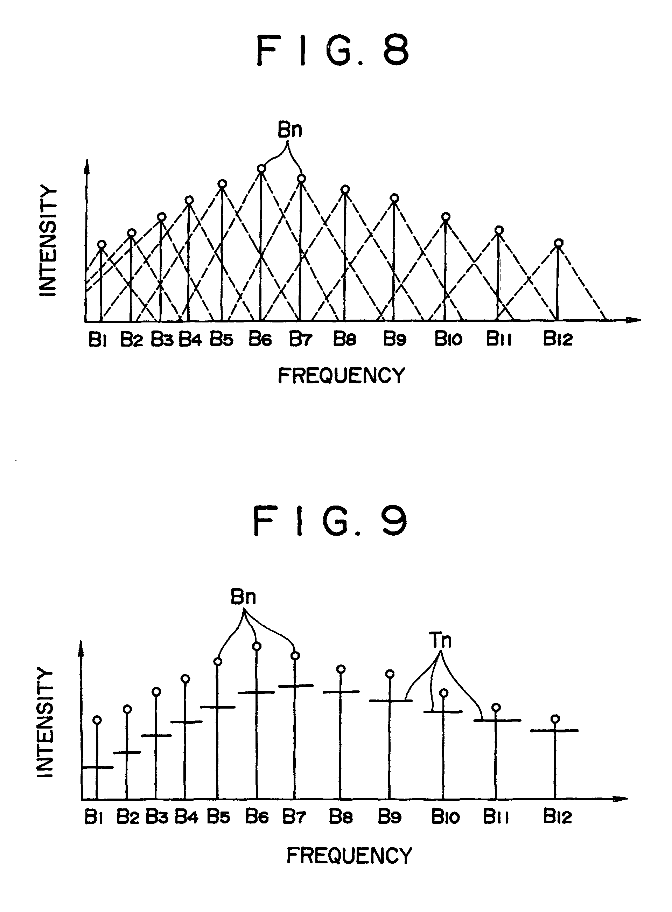

where n is 0 to 24, and $C_n$ is the number of elements in the n-th band, i.e., the amplitude term (the number of points), and $P_n$ is a peak value in each band. Bark spectra $B_n$ of respective bands are, e.g., as shown in FIG. 8. It is to be noted that, in the example of FIG. 8, for the brevity of illustration, the number of all the bands is represented, e.g., with 12 bands (B1 to B12). In the frequency analysis circuit 17, division at the critical bands and the frequency analysis of every band as described above are carried out. Its output information is sent to the allowable noise spectrum calculation circuit 18.

From the equi-loudness curve generation circuit 15, information of the equi-loudness curve RC is generated and outputted. Namely, by carrying out a noise shaping using an allowable noise spectrum obtained in consideration of the equi-loudness curve RC, noise shaping more effective in the hearing sense is conducted. Thus, the dynamic range in the hearing sense of a reproduced sound ca n be improved. Information of the equi-loudness curve RC (or its approximate curve) is outputted from the equi-loudness curve generation circuit 15, and is sent to the allowable noise spectrum calculation circuit 18.

Accordingly, in the allowable noise spectrum calculation circuit 18, the allowable noise spectrum is calculated on the basis of output information from the above-described equi-loudness curve generation circuit 15 and output information from the frequency analysis circuit 17. At this time, from the bark spectrum $B_n$ every critical band at the frequency analysis circuit 17, by carrying out convolution (convolving a predetermined weight function) in consideration of the influence between bands by using the following equation (2), the bark spectrum $S_n$ convolved every band is calculated.

$$S_n = H_n * B_n \qquad (2)$$

where $H_n$ is the coefficient of convolution. By this convolution, the sum total of the portions indicated by the dotted lines in FIG . 8 is provided. Further, by using the convolved bark spectrum $S_n$ and $O_n$ (n = 0 to 24) which is a S/N value required, a convolved m asking threshold $T_n$ is calculated in accordance with the following equations (3) and (4).

$$O_n = N - K \times n \qquad (3)$$

$$T_n = S_n - O_n \qquad (4)$$

For example, when N is assumed to be 38, K is permitted to be equal to 1. There results less degradation of sound quality at this time. Namely, as shown in FIG. 9, sound intensity values less than respective levels of the convolved masking thresholds $T_n$ are mask ed. Thereafter, by deconvolving the convolved masking threshold $T_n$ by using the following equation (5), an allowable noise level (allowable noise spectrum) $TF_n$ is calculated. Actually, DC gain $D_n$ of the convolution, e.g., by the coefficient $H_n$ is subtracted.

$$TF_n = T_n - D_n \qquad (5)$$

In the allowable noise spectrum calculation circuit 18, the allowable noise spectrum is calculated on the basis of synthetic information obtained by synthesizing output information from the frequency analysis circuit 17 obtained as described above and out put information from the previously described equi-loudness curve generation circuit 15.

Here, there are instances where the allowable noise level at the allowable noise spectrum based on the equi-loudness curve R C may be less than the allowable noise level where the masking effect is exerted by the level of an input audio signal. Namely, for example, in the case where the level of an input audio signal is high, the level of the allowable noise spectrum based on the equi-loudness curve may be also masked at the same time by the allowable noise level where the masking effect by the input audio signal is exerted.

In view of the above, in this embodiment, an approach is employed to detect the level of the input audio signal at the level detector 16 to vary, on the basis of the level detected output, the synthetic ratio between output information from the equi-loudness curve generation circuit 15 and output information from the frequency analysis circuit 17. Here, synthesis of output information of the equi-loudness curve generation circuit 15 and the frequency analysis circuit 17 is carried out, e.g., for every frequency band. In this case, the level detection at the level detector 16 is carried out for every band. Accordingly, the synthetic ratio can be changed for every band on the basis of level detected outputs in every band. Namely, with respect to synthetic information for determining an allowable noise spectrum in the allowable noise spectrum calculation circuit 18, for example, in the case where the level in a low frequency band of an input audio signal is high and the masking effect in the low frequency band is great, synthetic information is prepared at a synthetic ratio such that an allowable noise spectrum having a high level in the low frequency band and a low level in the high frequency band is provided. In contrast, for example, in the case where the level in a high frequency band is high a nd the masking effect in the high frequency band is great, synthetic information is prepared at a synthetic ratio such that an allow able noise spectrum having a high level in the high frequency band and a low level in the low frequency band is provided. Information of the allowable noise spectrum thus provided is sent to the filter coefficient calculation circuit 14. Thus, a filter coefficient corresponding to the allowable noise spectrum is outputted from the filter coefficient calculation circuit 14, and is then sent to the noise filter 13.

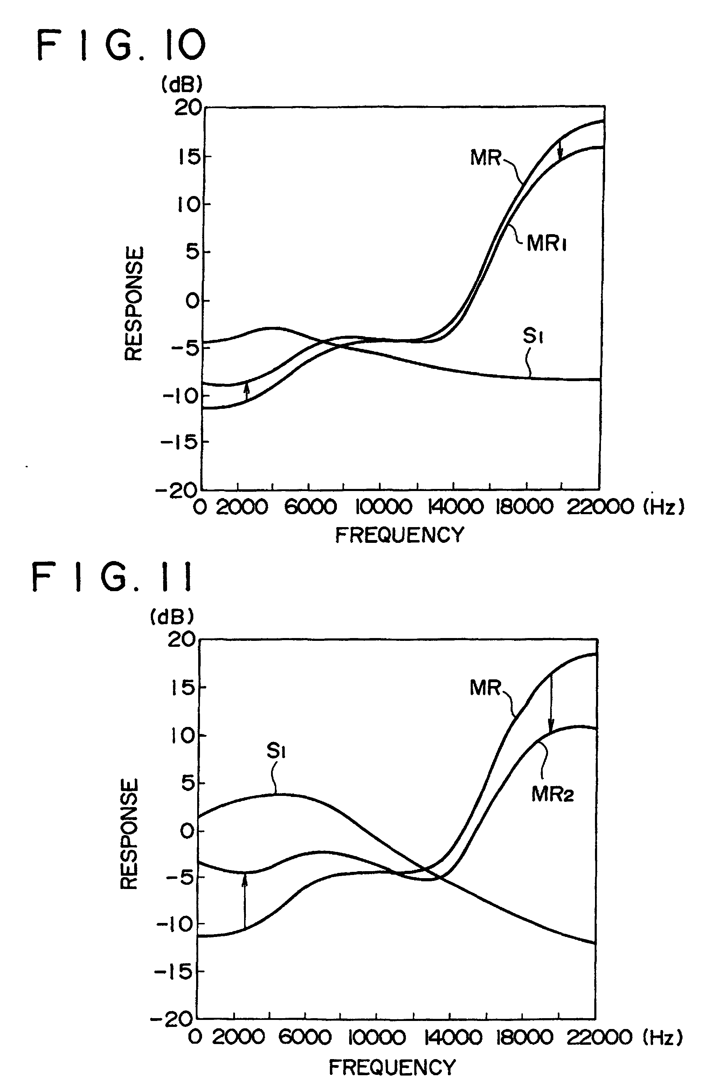

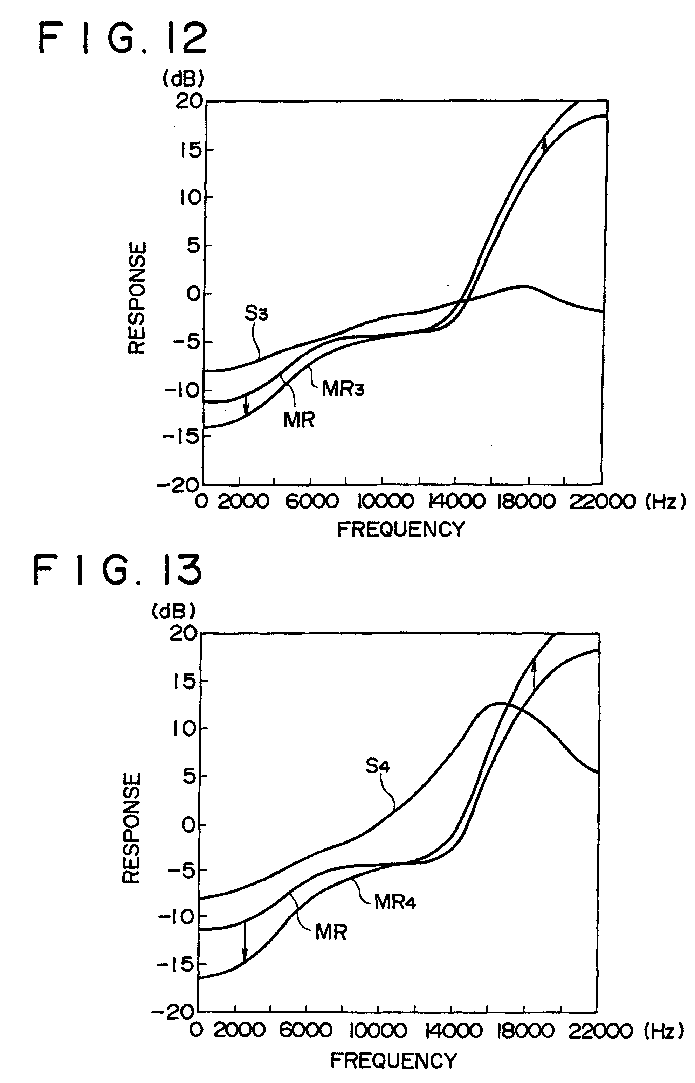

When the approach described above is employed, the filter characteristic of the noise filter 13 is caused to be in correspondence with the filter coefficient based on an allowable noise spectrum obtained by varying a synthetic ratio in every band in dependency upon the level of an input audio signal. Here, for example, in the case where the level of the input audio signal is flat, the filter characteristic of the noise filter 13 is assumed to be indicated by the curve MR of FIGS. 10 to 13. At this time, in the case where the input audio signal is a signal having a slightly high level in the low frequency band as shown in FIG. 10, because the synthetic ratio can be varied as described above, the filter characteristic can be changed to the characteristic as indicated by the curve MR1 in FIG. 10 in which the level of the curve MR in the low frequency band is slightly raised and the level thereof in the high frequency band is slightly lowered. Further, for example, in the case where the input audio signal is a signal S2 having a large level in the low frequency band as shown in FIG. 11, the filter characteristic of the noise filter 13 is changed to the characteristic as indicated by the curve MR2 in FIG. 11 in which the level of the curve MR in the low frequency band is greatly raised and the level thereof in the high frequency band is greatly lowered. In contrast, in the case where the input audio signal is a signal S3 having a slightly larger level in the high frequency band as indicated by FIG. 12, the filter characteristic is changed to the characteristic as indicated by the curve MR3 in FIG. 12 in which the level of the curve MR in the low frequency band is slightly lowered and the level thereof in the high frequency band is slightly raised. Further, for example, in the case where the input audio signal is a signal S4 having a high level in the high frequency band as shown in FIG. 13, the filter characteristic is changed to the characteristic as indicated by the curve MR4 in FIG. 13 in which the level of the curve MR in the low frequency band is greatly lowered and the level thereof in the high frequency band Is greatly raised. As the result of the fact that the filter characteristic is changed as shown in FIGS. 10 to 13, noise shaping more properly adapted to the hearing sense characteristic of the human being can be carried out.

Namely, in the quantizing noise reducer of this embodiment, when the level of an input audio signal is small, the filter characteristic of the noise filter 13 is caused to be the characteristic as indicated by the equi-loudness curve RC to carry out noise shaping. Further, in order to allow the quantizing level not to be conspicuous when the level of the input audio signal according as the signal level becomes large, the characteristic of the noise filter 13 is caused to be flat in correspondence with the signal level of the input audio signal. In addition, when the signal level is small, the characteristic as indicated by the equi-loudness curve RC is caused to become closer to a flat characteristic in correspondence with the signal level by the noise filter 13 to change it to a noise shaping characteristic (masking characteristic, etc.) in correspondence with the signal characteristic. Namely, when the signal level is small, the characteristic of th e noise filter 13 is caused to be a filter characteristic as indicated by the equi-loudness curve RC, while when the signal level is large, the characteristic of the noise filter 13 is caused to be the filter characteristic in which the masking effect is taken in to consideration.

In the curve MR showing the filter characteristic when the level of the input audio signal of FIGS. 10 to 13 is flat, if th e previously described equi-loudness curve RC of FIG. 4 is taken into consideration, a scheme is conceivable to raise the level of frequencies less than 4 KHz (i.e., an approach may be employed to increase allowable noise). However, since the equi-loudness curve RC steeply changes in the frequency band less than 4 KHz although the bandwidth is not broad, if noise filter 13 in conformity with the equi-loudness curve RC in the frequency band less than 4 KHz is prepared, the degree of the filter is increased. When the degree of the filter is increased, the configuration becomes complicated and becomes large in scale. However, since the effect corresponding to the scale of the filter cannot be provided, also in this embodiment, the filter characteristic in the frequency band less than 4 KHz is caused to be flat as described above in the same manner as in the second embodiment of FIG. 5. Further, in the noise filter 13 of this embodiment, since the masking effect in the medium and high frequency bands, which frequently occur in audio sound is ordinarily valid, an approach is employed not to lower the level of the curve MR of FIGS. 10 to 13 to an extent of the equi-loudness curve RC of FIG. 4 (The curve MR is caused to be more gentle than the equi-loudness curve RC). Namely, to realize this, as described above, the filter coefficient in which the masking effect is taken into consideration is set.

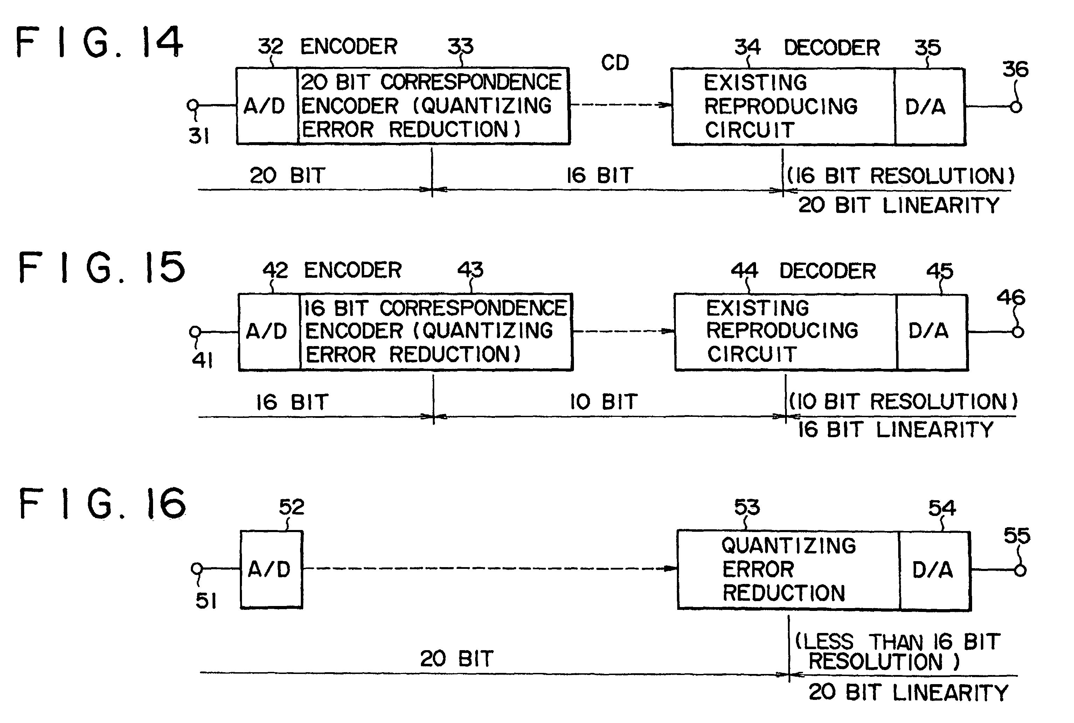

An actual example of the system configuration where the quantizing error reducer of this embodiment is used as the encoder/decoder system in, e.g., a compact disk (CD)unit is shown in FIG. 14. In FIG. 14, an analog audio signal is delivered to the input terminal 31. After this analog audio signal is converted to a 20 bit digital signal at an A/D converter 32, it is sent to a 20 bit correspondence encoder 33 including therein the quantizing error reducer of this embodiment. At the encoder 33, that digital data undergoes the quantizing error reducing processing and is encoded into data of 16 bits. The data thus processed is recorded onto the CD. The data recorded on the CD is converted to an audio signal at a reproducing circuit 34 and a D/A converter 35 of the existing CD player, and is outputted from the output terminal 36. The data thus outputted is then reproduced. Namely, since the data recorded on the CD is such that the quantizing error is reduced by the quantizing error reducer of this invention, sound obtained by playing back the CD has a high dynamic range in the hearing sen se.

Further, an actual example of the system configuration using e.g., a medium for recording data by using 10 bits different from the above-mentioned CD is shown in FIG. 15. In this case, an analog signal imputed and delivered to the input terminal 41 is converted to, e. g., 16 bit digital data at an A/D converter 42. The signal thus obtained is sent to a 10 bit correspondence encoder 43 including therein the quantizing error reducer of this invention. At the encoder 43, the digital data undergoes the quantizing error reducing processing and is encoded into 10 bit data. The data thus processed is recorded onto the medium. The data recorded on the medium is converted to an analog signal at a reproducing circuit 44 and a D/A converter 45 of the existing player, and is outputted from the output terminal 46. Also in this case, a reproduced signal obtained has a high dynamic range.

An actual example where the quantizing error reducer of this embodiment is used in the D/A conversion system for carrying out oversampling is shown in FIG. 16. In this case, an analog signal imputed and delivered to the input terminal 51 is converted to, e.g., digital data of 20 bits at an A/D converter 52 for carrying out oversampling, and is sent to a quantizing error reducer 53 of this embodiment through a transmission path. At this quantizing error reducer 53, that digital data undergoes the quantizing err or reducing processing. The digital data thus processed is converted to an analog signal through a D/A converter 54, and is output ted from the output terminal 55. Thus, over sampling is permitted to be carried out and the resolution of the D/A converter is permitted to be lowered. Thus, the D/A converter 54 having a high linearity can be easily prepared.

It will be apparent that various additions and modifications may be made in the present invention without departing from the essential features of thereof, which are intended to be defined and secured by the appended claims.

**Claims**

1. A quantizing noise reducing system for an audio signal comprising:

   quantizing means (11) for quantizing a conditioned input audio signal,
   subtractor means (12) for subtracting said conditioned input signal to said quantizing means (11) from an output signal of said quantizing means,

   - a first subsystem comprising noise filter means (13) supplied with an output from said subtractor means (12) an output of said noise filter means (13) being additively combined with said audio input signal, wherein the filter coefficients of said noise filter means (13) are set on the basis of information relating to an equi-loudness curve (RC) corresponding to the hearing sense characteristic of the human being,

   **characterized by**

   - a second subsystem consisting of a dither generating means (21) for generating a random or pseudo-random dither signal to be additively combined with said audio input signal, wherein said dither generating means (21) is controlled by a level detector (20) supplied with said audio input signal, said level detector control being based on the signal level of said input audio signal and such that the frequency characteristic and the level of said dither generating means (21) are adjusted.

2. The quantizing noise reducer according to claim 1, **characterized in that** said filter control means are provided for controlling the characteristic of that filter means (13) and include a filter coefficient calculating means (14) and data generating means (15) for generating data relating to said equl-loudness characteristic, said data being supplied to said filter coefficient calculating means (14).

3. A quantizing nose reducer according to claim 1 or 2, **characterized in that** said filter control means further includes means for generating control data for correcting a lower frequency band portion of said filter characteristic.

4. A quantizing noise reducer according to claim 1 or 2, **characterized in that** said filter control means further includes means for controlling said filter characteristic in accordance with the masking effect of said input audio signal.

5. A quantizing noise reducer according to claim 1 or 2, **characterized in that** said filter control means produces a control signal to provide a filter characteristic to realize a noise shaping such that an allowable noise spectrum obtained in consideration of the temporal masking effect is provided in accordance with the spectrum of said input audio signal.

6. A quantizing noise reducer according to claim 4, **characterized in that** said filter control means produces a control signal to provide a filter characteristic to realize a noise shaping such that an allowable noise spectrum, obtained in consideration of the masking effect on the time base, is provided in accordance with the spectrum of said input audio signal.

7. A quantizing noise reducer according to claim 4, **characterized in that** said filter control means produces a control signal to provide a filter characteristic to realize a noise shaping such that an allowable noise spectrum, in which the equi-loudness curve is taken into consideration when the signal level of said input audio signal is small, and the masking effect is taken into consideration according as the signal level thereof becomes large, is provided in accordance with said signal level of said input audio signal.

8. A method for reducing the quantizing noise of a digital audio signal comprising the steps of
additively influencing a digital audio input signal by two independently variable parameters having complementary effects on said digital audio input signal before quantizing of said such influenced audio input signal, namely

- firstly by generating a dither signal defined as a random or pseudo-random signal to be added to said digital audio input signal, said dither signal being controlled according to a detected level of said audio input signal such that the frequency characteristic of the dither and the level of said dither are adjusted, and
- secondly by noise filtering the subtractive result of a signal comparison of the quantized audio output signal against the unquantized audio input signal and adding the noise filtering result to said digital audio input signal, said noise filtering step being defined by filter coefficients that are set on the basis of information relating to an equi-loudness curve corresponding to the hearing sense characteristic of the human being.

9. An encoder for audio signals, **characterized by** comprising a quantizing noise reducing means according to at least one of claims 1 to 7.

**Patentansprüche**

1. System zum Vermindern von Quantisierungsrauschen in einem Audiosignal, mit:

- einer Quantisierungseinrichtung (11) zum Quantisieren eines aufbereiteten, eingegebenen Audiosignals;
- einer Subtrahiereinrichtung (12) zum Subtrahieren des aufbereiteten Eingangssignals für die Quantisierungseinrichtung (11) von einem Ausgangssignal derselben;
- einem ersten Untersystem mit einer Störsignalfiltereinrichtung (13), die mit einem Ausgangssignal der Subtrahiereinrichtung (12) versorgt wird, wobei das Ausgangssignal der Störsignalfiltereinrichtung (13) zusätzlich mit dem eingegebenen Audiosignal kombiniert wird, wobei die Filterkoeffizienten der Störsignalfiltereinrichtung (13) auf Grundlage von Information betreffend eine der menschlichen Gehörsinncharakteristik entsprechenden Äquilautstärkekurve (RC) eingestellt werden;

**gekennzeichnet durch**

- ein zweites Untersystem mit einer Dithererzeugungseinrichtung (21) zum Erzeugen eines zufälligen oder pseudozufälligen Dithersignals, das mit dem eingegebenen Audiosignal additiv zu kombinieren ist, wobei die Dithererzeugungseinrichtung (21) **durch** einen mit dem eingegebenen Audiosignal versorgten Pegeldetektor (20) gesteuert wird, wobei die Steuerung **durch** den Pegeldetektor auf dem Signalpegel des eingegebenen Audiosignals beruht und sie dergestalt erfolgt, dass die Frequenzcharakteristik und der Pegel der Dithererzeugungseinrichtung (21) eingestellt werden.

2. Quantisierungsrauschenverminderer nach Anspruch 1, **dadurch gekennzeichnet, dass** die Filtersteuereinrichtung vorhanden ist, um die Charakteristik der Filtereinrichtung (13) zu steuern, und sie eine Filterkoeffizient-Berechnungseinrichtung (14) und eine Datenerzeugungseinrichtung (15) zum Erzeugen von Daten betreffend die Äquilautstärkecharakteristik beinhaltet, wobei die Daten an die Filterkoeffizient-Berechnungseinrichtung (14) geliefert werden.

3. Quantisierungsrauschenverminderer nach Anspruch 1 oder 2, **dadurch gekennzeichnet, dass** die Filtersteuereinrichtung ferner eine Einrichtung zum Erzeugen von Steuerdaten zum Korrigieren eines Niederfrequenzband-Abschnitts der Filtercharakteristik beinhaltet.

4. Quantisierungsrauschenverminderer nach Anspruch 1 oder 2, **dadurch gekennzeichnet, dass** die Filtersteuereinrichtung ferner eine Einrichtung zum Steuern der Filtercharakteristik entsprechend dem Maskierungseffekt des eingegebenen Audiosignals beinhaltet.

5. Quantisierungsrauschenverminderer nach Anspruch 1 oder 2, **dadurch gekennzeichnet, dass** die Filtersteuereinrichtung ein Steuersignal erzeugt, um eine Filtercharakteristik zum Realisieren einer solchen Störsignalformung zu liefern, dass ein zulässiges Störsignalspektrum, das unter Berücksichtigung des zeitweiligen Maskierungseffekts erhalten wird, entsprechend dem Spektrum des eingegebenen Audiosignal geliefert wird.

6. Quantisierungsrauschenverminderer nach Anspruch 4, **dadurch gekennzeichnet, dass** die Filtersteuereinrichtung ein Steuersignal erzeugt, um eine Filtercharakteristik zum Realisieren einer Störsignalformung in solcher Weise zu liefern, dass ein zulässiges Störsignalspektrum, das unter Berücksichtigung des Maskierungseffekts auf zeitlicher Basis erhalten wird, entsprechend dem Spektrum des eingegebenen Audiosignals geliefert wird.

7. Quantisierungsrauschenverminderer nach Anspruch 4, **dadurch gekennzeichnet, dass** die Filtersteuereinrichtung ein Steuersignal zum Liefern einer Filtercharakteristik zum Realisieren einer solchen Störsignalformung erzeugt, dass ein zulässiges Störsignalspektrum, bei dem die Äquilautstärkekurve berücksichtigt wird, wenn der Signalpegel des eingegebenen Audiosignals klein ist, und der Maskierungseffekt entsprechend berücksichtigt wird, wenn der zugehörige Signalpegel groß wird, entsprechend dem Signalpegel des eingegebenen Audiosignals gebildet wird.

8. Verfahren zum Vermindern von Quantisierungsrauschen in einem digitalen Audiosignal, mit den folgenden Schritten:

   - additives Beeinflussen eines eingegebenen digitalen Audiosignals durch zwei unabhängig variable Parameter mit komplementären Effekten auf das eingegebene digitale Audiosignal vor dem Quantisieren des so beeinflussten eingegebenen Audiosignals, d.h.

   -- als Erstes wird ein Dithersignal erzeugt, das als Zufalls- oder Pseudozufallssignal definiert ist, das zum eingegebenen digitalen Audiosignal zu addieren ist und das entsprechend dem erfassten Pegel des eingegebenen Audiosignals in solcher Weise kontrolliert wird, dass die Filtercharakteristik des Dithersignals und der Pegel desselben eingestellt sind; und

   -- als Zweites erfolgt eine Störsignalfilterung des Subtraktionsergebnisses betreffend einen Signalvergleich des quantisierten, ausgegebenen Audiosignals mit dem nicht quantisierten, eingegebenen Audiosignal, und es erfolgt ein Addieren des Ergebnisses der Störsignalfilterung zum eingegebenen digitalen Audiosignal, wobei der Störsignal-Filterungsschritt durch Filterkoeffizienten definiert wird, die auf Grundlage von Information betreffend eine der menschlichen Gehörsinncharakteristik entsprechenden Äquilautstärkekurve eingestellt werden.

9. Codierer für Audiosignale, **dadurch gekennzeichnet, dass** er eine Quantisierungsrauschen-Verminderungseinrichtung gemäß mindestens einem der Ansprüche 1 bis 7 aufweist.

**Revendications**

1. Système de réduction de bruit de quantification pour un signal audio, comprenant:

   des moyens de quantification (11) pour quantifier un signal audio d'entrée conditionné, des moyens soustracteurs (12) pour soustraire ledit signal d'entrée conditionné envoyé auxdits moyens de quantification (11), d'un signal de sortie dudit moyen de quantification,

   - un premier sous-système comprenant des moyens formant filtre de bruit (13) alimenté par un signal de sortie délivré par lesdits moyens formant soustracteurs (12), un signal de sortie dudit moyen formant filtre de bruit (13) étant combiné de façon additive audit signal audio d'entrée, les coefficients de filtre dudit moyen de filtre de bruit (13) étant fixés sur la base d'une information associée à une courbe d'équi-intensité acoustique (RC) correspondant à la caractéristique du sens de l'ouïe de l'être humain,

**caractérisé par**

- un second sous-système constitué par des moyens (21) de production de tremblements (21) pour produire un signal de tremblement aléatoire ou pseudo-aléatoire destiné à être combiné de façon additive audit signal d'entrée audio, lesdits moyens de production de tremblements (21) étant commandés par un détecteur de niveau (20) alimenté par ledit signal audio, ladite commande du détecteur de niveau étant basée sur le niveau dudit signal audio d'entrée, et de telle sorte que la caractéristique de fréquence et le niveau desdits moyens de production de tremblements (21) sont ajustés.

2. Réducteur de bruit de quantification selon la revendication 1, **caractérisé en ce que** lesdits moyens de commande du filtre sont prévus pour commander la caractéristique desdits moyens de filtre (13) et incluent des moyens (14) de calculs de coefficients du filtre et des moyens de production de données (15) pour produire des données associées à ladite caractéristique d'équi-intensité acoustique, lesdites données étant envoyées auxdits moyens (14) de calcul des coefficients de filtre.

3. Réducteur de bruit de quantification selon la revendication 1 ou 2, **caractérisé en ce que** lesdits moyens de commande du filtre comprennent en outre des moyens pour produire des données de commande pour corriger une partie inférieure de la bande de fréquences de ladite caractéristique du filtre.

4. Réducteur de bruit de quantification selon la revendication 1 ou 2, **caractérisé en ce que** lesdits moyens de commande de filtre comprennent en outre des moyens pour commander ladite caractéristique du filtre en fonction de l'effet de masquage dudit signal audio d'entrée.

5. Réducteur de bruit de quantification selon la revendication 1 ou 2, **caractérisé en ce que** lesdits moyens de commande du filtre produisent un signal de commande pour produire une caractéristique de filtre pour réaliser une mise en forme du bruit de telle sorte qu'un spectre de bruit admissible obtenu en tenant compte de l'effet de masquage temporel est prévu conformément au spectre dudit signal audio d'entrée.

6. Réducteur de bruit de quantification selon la revendication 4, **caractérisé en ce que** lesdits moyens de commande du filtre produisent un signal de commande de manière à produire une caractéristique de filtre pour réaliser une mise en forme du bruit de telle sorte qu'un spectre de bruit admissible, obtenu en tenant compte de l'effet de masquage sur la base des temps, est prévu conformément au spectre dudit signal audio d'entrée.

7. Réducteur de bruit de quantification selon la revendication 4, **caractérisé en ce que** lesdits moyens de commande de filtre produisent un signal de commande servant à produire une caractéristique de filtre pour réaliser une mise en forme du bruit de telle sorte qu'un spectre de bruit admissible, dans lequel la courbe d'équi-intensité acoustique est prise en compte lorsque le niveau dudit signal audio d'entrée est faible, et l'effet de masquage est pris en compte conformément au fait que son niveau de signal devient élevé, est prévu conformément audit niveau dudit signal audio d'entrée.

8. Procédé pour réduire le bruit de quantification d'un signal audio numérique comprenant les étapes consistant à:

influer de façon additive sur un signal d'entrée audio numérique au moyen de deux paramètres variables de façon indépendante, ayant des effets complémentaires sur ledit signal d'entrée audio numérique avant la quantification dudit signal d'entrée audio ainsi influencé, à savoir

- tout d'abord en produisant un signal de tremblement défini en tant que signal aléatoire ou pseudo-aléatoire devant être ajouté audit signal d'entrée audio numérique, ledit signal de tremblements étant commandé en fonction d'un niveau détecté dudit signal d'entrée audio de telle sorte que la caractéristique de fréquence du tremblement et le niveau dudit tremblement sont ajustés; et
- en second lieu au moyen d'un filtrage du bruit du résultat de la soustraction d'une comparaison du signal de sortie audio quantifié par rapport au signal d'entrée audio non quantifié, et addition du résultat de filtrage de bruit audit signal d'entrée audio numérique, ladite étape de filtrage de bruit étant définie par des coefficients de filtre qui sont réglés sur la base de l'information associée à une courbe d'équi-intensité acoustique correspondant à la caractéristique du sens de l'ouïe de l'être humain.

9. Codeur pour signaux audio **caractérisé en ce qu'**il comprend des moyens de réduction du bruit de quantification selon au moins l'une des revendications 1 à 7.

# F I G. I

# F I G. 2

# F I G. 3

# F I G. 4

# F I G. 5

LEVEL
DETECTOR — 20

DITHER
GENERATOR — 21

1

10 +

11

QUANTIZER

2

+

12
− +

13

FILTER

14

FILTER
COEFFICIENT
CALCULATION

16

LOW FREQUENCY
BAND CORRECTION
CONTROL SIGNAL
GENERATION

EQUI-LOUDNESS
CURVE

15

# F I G. 6

# F I G. 7

# F I G. 8

Bn

INTENSITY

B1 B2 B3 B4 B5 B6 B7 B8 B9 B10 B11 B12

FREQUENCY

# F I G. 9

Bn

Tn

INTENSITY

B1 B2 B3 B4 B5 B6 B7 B8 B9 B10 B11 B12

FREQUENCY

# F I G. IO

# F I G. II

# F I G. 12

# F I G. 13

# F I G. 14

## 32 ENCODER    33    CD    34 DECODER    35    36

| 31 | A/D | 20 BIT CORRESPONDENCE ENCODER (QUANTIZING ERROR REDUCTION) | EXISTING REPRODUCING CIRCUIT | D/A |

20 BIT                      16 BIT                      (16 BIT RESOLUTION)
                                                        20 BIT LINEARITY

# F I G. 15

## 42 ENCODER    43    44 DECODER    45    46

| 41 | A/D | 16 BIT CORRESPONDENCE ENCODER (QUANTIZING ERROR REDUCTION) | EXISTING REPRODUCING CIRCUIT | D/A |

16 BIT                      10 BIT                      (10 BIT RESOLUTION)
                                                        16 BIT LINEARITY

# F I G. 16

## 52    53    54    55

| 51 | A/D | | QUANTIZING ERROR REDUCTION | D/A |

20 BIT                                              (LESS THAN 16 BIT RESOLUTION)
                                                    20 BIT LINEARITY

EP 0 568 846 B1

# F I G. 17

# F I G. 18

# F I G . 19